# EUROPEAN PATENT SPECIFICATION

(11) **EP 1 287 252 B1**
(45) Date of publication and mention of the grant of the patent: **10.05.2006**
(21) Application number: 01932032.4
(22) Date of filing: 29.05.2001
(51) Int. Cl.: F02M 37/22

(54) **APPARATUS FOR AUTOMATICALLY DRAINING WATER ACCUMULATED IN A FUEL FILTER OF A VEHICLE, PARTICULARLY FOR DIESEL ENGINES**
EINRICHTUNG ZUR AUTOMATISCHEN ENTLEERUNG VON AKKUMULIERTEM WASSER IN EINEM KRAFTSTOFFILTER EINES FAHRZEUGES, INSBESONDERE FÜR DIESELMOTOREN
APPAREIL PERMETTANT L'EVACUATION AUTOMATIQUE D'EAU S'ETANT ACCUMULEE DANS UN FILTRE A CARBURANT D'UN VEHICULE, DESTINE EN PARTICULIER A DES MOTEURS DIESEL

(30) Priority: 05.06.2000 IT RE000062
(43) Date of publication of application: 05.03.2003
(73) Proprietor: UFI Filters S.p.A., 46047 Porto Mantovano (Mantova) (IT)
(72) Inventor: GIRONDI, Giorgio, MC-98003 Monaco (MC)
(74) Representative: Corradini, Corrado
(86) International application number: PCT/IB2001/000966
(87) International publication number: WO 2001/094773

(56) References cited:
- GB-A- 2 065 336
- GB-A- 2 097 927
- US-A- 2 442 379
- US-A- 3 931 011
- US-A- 4 491 143

## Description

### Technical field

This invention relates to impovements in the automatic bleed unit for a disposable filter fully.

### Background art

Essentially, the known devices comprise a sensor means associated with the chamber of the filter for the vehicle fuel (such as diesel oil) in which the water present in said fuel accumulates, a withdrawal device provided for discharging said water when it reaches a predetermined maximum level, and a microprocessor (or electronic card) which is connected to said sensor means and to said withdrawal device such as to activate this latter, with the vehicle engine at rest and the relative electrical system live, when the water reaches said predetermined maximum level.

US 3931011 discloses a unit which comprises a level reading and monitoring system comprising two sensor probes. Said sensor probes are insulatingly sealed through the wall of a tank at different levels from the bottom of the tank, and into the fluid contained in the lower portion thereof. An appropriate electrical device may be connected to the probes to establish a potential difference there between which will produce a current flow through the fluid in contact with such probes. The current flow through the low density fluid (fuel) will tend to be different than the current flow through a high density fluid (water) and the electrical control device is designed to sense such difference.

Only one level of the water, i.e. the level of the upper probe, is sensed an only one signal is sent.

GB 2065336 discloses a system for controlling the level of water or air contaminating oil in a separator or reservoir, to prevent the level from becoming excessive. The a system comprises a vent valve or pump 13, 14 which is automatically opened when a first probe detects its presence and remains open for a prescribed time after the pulse is clear, and a second probe is provided which gives an alarm indication, and also energises the motor/valve, if that too detects the contaminant, for a longer period than the first. The system may be in the fuel supply to a I.C. engine, which may be stopped if the second probe remains activated for a prescribed time.

The known devices are complicated and too expensive, to be suitable for use in disposable oil filters for engines.

The main object of the present invention is to obviate the aforesaid problem within the context of a simple, rational, reliable and economical construction.

### Disclosure of the invention

Said object is attained by virtue of the characteristics indicated in claim 1.

In attaining said object, according to the invention said sensor means of the known unit cited in the introduction is made to consist of a differential water level reading and monitoring system comprising two measurement members, each sensitive to a level between the maximum predetermined level and the depth of said accumulation chamber, said two measurement members being connected to the unit microprocessor such that, with the vehicle engine at rest and the relative electrical system live, it energizes said withdrawal device in response to the signal received from one or other of said two members.

Moreover, apart from the respective external electric cabling, and as will be apparent hereinafter, the constituent elements of said two measurement members are advantageously permanently positioned in the lower part of the accumulation chamber of the disposable filter.

Finally, means described hereinafter are interposed between said differential reading and monitoring system and that part of the bleed unit permanently associated with the visual indicator, to verify the compatibility between the filter and the bleed unit.

By virtue of the aforegoing, all the objects of the invention are attained.

In this respect, the danger of non-intervention of the sensor means is reduced to a minimum in that on the one hand the activation signal for the bleeding stage is generated even if the reading member is disabled by the presence of excessive deposits of foreign material, and on the other hand a filter having characteristics different from those required by the bleed unit cannot be mounted.

The constructional and operational characteristics and merits of the invention will be apparent from the ensuing detailed description, given with reference to the figures of the accompanying drawings, which show two preferred embodiments thereof by way of non-limiting example.

Figure 1 is an overall scheme showing the main components of the unit.

Figure 2 is an axial section showing the discharge port of the disposable filter of Figure 1, said filter being of the type operating with its cartridge under pressure.

Figure 3 is a view similar to the preceding, where the filter shown is of the type operating with its cartridge under vacuum. Said figures, and in particular Figure 1, show a filter 1 of the disposable cartridge type, known overall, comprising, starting from the top downwards, a conduit 2 through which the fuel (such as diesel oil) to be filtered arrives, a conduit 3 through which the filtered fuel leaves, a filtering diaphragm 4, a chamber 5 for collecting the water separated from said fuel, and a discharge port 6 for said water.

In said port 6 there is housed a differential reading and monitoring system, described hereinafter, for the level 10 of the water present in the chamber 5, below the port 6 there being a water withdrawal device 7 from which there branches a conduit 8 leading to an accumulation vessel 9.

The device 7 is permanently installed on the vehicle provided with the filter 1, and is incorporated in the respective electrical system. It is connected to the battery 11 by the cable 13 via the switch 12.

The switch 12 is controlled by the microprocessor or electronic card 14, which is connected to the ignition switch 15 of said vehicle.

In the usual manner, by means of the key 16 said ignition switch 15 can assume three positions indicated by A, B and C respectively, in the first A of which the vehicle engine is stationary and the respective electrical system is switched off, in the second B the engine is at rest and the electrical system is energized, and in the third C the engine rotates and the electrical system is live.

According to a first embodiment of the invention, in the vehicle passenger compartment, typically on the dashboard, there is a warning lamp 17, usually present on most vehicles, typically those with a diesel engine.

Said lamp 17 is connected to a differential reading and monitoring system for the level 10 by the cable 170, and is controlled by the card 14. Said cable 170 presents a branch 177, also connected to said differential level reading and monitoring system, the purpose of said branch being apparent hereinafter.

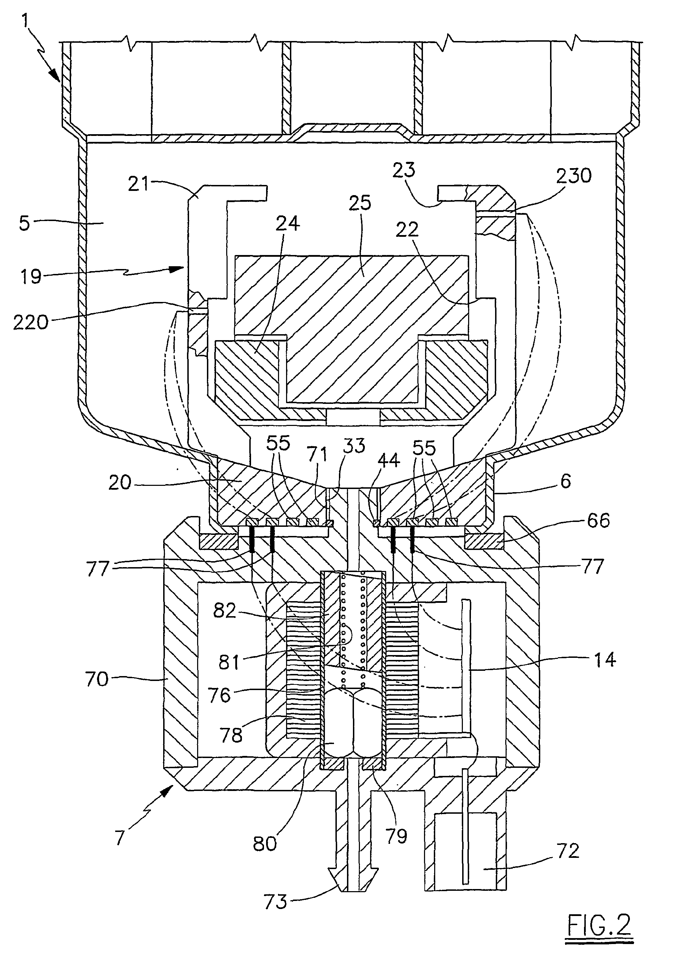

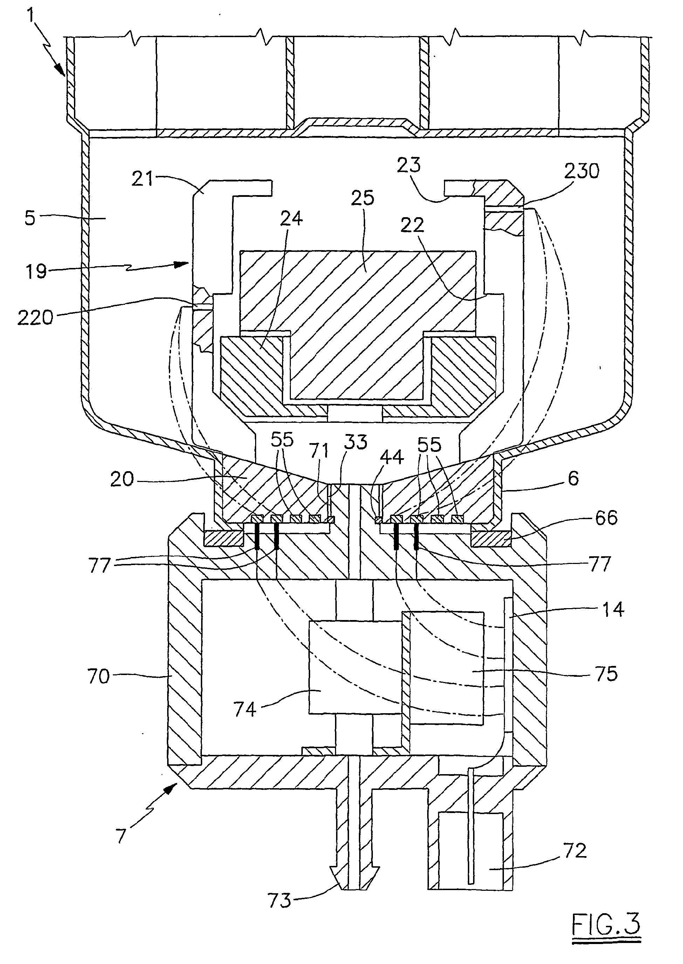

Said differential level reading and monitoring system comprises, as shown in Figures 2 and 3, a cup-shaped member 19 the base part 20 of which is centrally provided with a threaded through hole 33 and is sealed inside the port 6 of the filter 1.

The wall of said cup-shaped member is defined by three (or more) angularly equidistant salient fins 21 each presenting two inwardly projecting shoulders, namely a lower 22 and an upper 23.

The shoulders 22 and 23 define the upward travel limit of respective floats 24 and 25 contained within the member 19 with a certain radial slack.

Said floats 24 and 25 have a specific gravity between that of water and that of the fuel.

The lower float 24 is shaped as a cup, in the base of which there is a central hole coaxial with the hole 33 in the base of the member 19.

The upper float 25 is shaped in the manner of a mushroom the stem of which is contained, with a certain radial slack, in the cavity of the underlying float 24.

When the level 10 of the water present in the filter collection chamber 5 is insufficient to raise the floats, as shown in Figures 2 and 3, the head of said mushroom shape rests against the upper circumferential edge of the lower float 24, and the stem of said mushroom shape is slightly spaced from the base of said lower float 24.

This is to prevent any inconvenient sticking between the two floats, seeing that the foreign material separated from the fuel tends to accumulate in the lowest part of the chamber 5. Respective sensors 220 and 230 are positioned at said shoulders 22 and 23.

In a first embodiment said sensors 220 and 230 are magnetic proximity microswitches, in which case the floats 24 and 25 are suitably magnetized, for example by means of a thin metal strip wrapped about their end.

Alternatively said sensors 220 and 230 can consist of optical sensors sensitive to the colour, the same or different, of the respective floats 24 and 25.

Said sensors 220 and 230 are electrically powered via a recognition system arranged to identify compatibility between the disposable filter 1 and that part of the bleed unit permanently associated with the vehicle, which in the illustrated example is the withdrawal device 7.

This latter comprises a casing 70 presenting at its top an externally threaded hollow stem 71 screwed into the hole 33 in the base part 20 with a gasket 44 therebetween.

Concentrically to said stem 71, on the lower face of the base part 20, there are embedded four electrically conductive annular tracks 55, external to which there is an annular gasket 66 clamped between the casing 70 and the port 6.

The outer pair of tracks 55 is electrically connected to the sensor 220, the inner pair being connected to the sensor 230. Against said two pairs of tracks 55 there rest respective pairs of underlying electrically conductive push rods 77 which are slidingly mounted on the upper wall of the casing 70 via suitable interposed elastic thrust means, not shown in the figures, for example in the form of leaf springs.

The aforedescribed electrical connection of interface type forms said system for identifying compatibility between the disposable filter 1 and that part of the bleed unit associated with the vehicle.

Said push rods 77 are electrically connected to the card 14 positioned in the casing 70 and connected in its turn to the vehicle electrical system by the push-on connector 72.

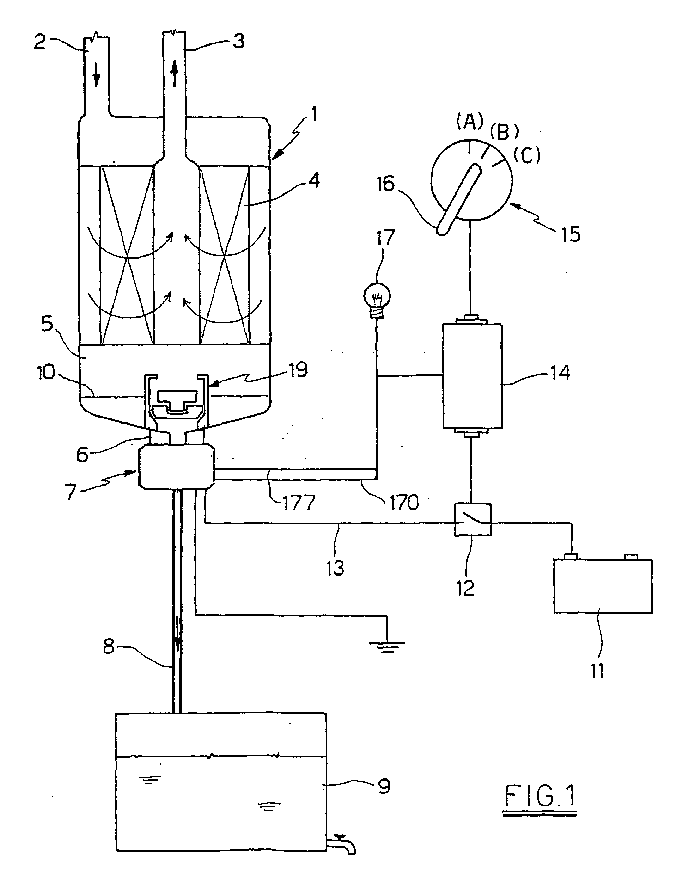

To the side of the connector 72 there is a water discharge spout 73 which at its bottom is connected to the conduit 8 (see Figure 1) and at its top communicates with the stem 71 via the following interposed means.

In the case of a filter 1 with a vacuum cartridge (see Figure 3), said means comprise a micropump 74 interposed between said spout 73 and stem 71, and driven by an electrical micromotor 75 powered by the battery 11 when enabled by the card 14, said micropump, micromotor and card being housed in the casing 10.

In the case of a filter with a pressure cartridge (see Figure 2), said means consist of a normally closed solenoid valve.

This comprises a tube 76 sealedly clamped between said stem 71 and spout 73, to form the core of a coil 78 electrically connected to the card 14.

Inside said tube 76 there are provided, from the bottom upwards, a gasket 79, a valving element 80, a compressed spring 81 for maintaining the visual indicator constantly urged elastically towards the closure position, and a jacket 82 wrapping the upper part of the spring 81 to define the extent of opening travel of the visual indicator 80.

The invention operates as follows.

With reference to Figure 1, in which it can be seen that the sensors 220 and 230 are connected in parallel with the lamp 17, when the level of the water 10 is below the predetermined value the lamp 17 remains extinguished whatever the position of the ignition switch 15, and the floats 24 and 25 adapt to said level. Under normal operating conditions the lower float 24 rises carrying with it the upper float 25.

When the water 10 exceeds said predetermined level, and the vehicle electrical system is energized, the sensor 220 senses the presence of the lower float 24 and emits a signal causing the lamp 17 to light. The lamp 17 could for example remain lit continuously, for the reason given hereinafter.

If the vehicle engine rotates, the card 14 inhibits intervention of the withdrawal device 7, whereas if the engine is at rest the card 14 energizes the device 7 for a predetermined period sufficient for all the water present in the chamber 5 to be discharged, with simultaneous extinguishing of the lamp 17.

If the lower float 24 is unable to rise, for example because it adheres to the soiled face of the base part 20, only the upper float 25 rises, the procedure being repeated identically when the upper sensor 230 senses the presence of said upper float 25.

The electronic card 14 is preferably provided with means for selecting the energization time of the withdrawal device 7 depending on the specific sensor activated.

This is because activation of the sensor 230 means that there is a greater accumulation of water 10 than that associated with activation of the sensor 220. Consequently in the former case the period of energization of the device 7 is correspondingly greater. Advantageously, according to the invention the electronic card 14 is provided with means for indicating possible lack of energization of the withdrawal device 7 when the water has reached the predetermined level, which may be due either to non-raising of the lower float 24 as already stated, or non-intervention of the lower sensor 220, for example due to a fault.

Said means are typically arranged to energize the warning lamp 17 in a different manner depending on which sensor has emitted the overfull signal.

For example the lamp 17 may as stated emit continuous light when the lower sensor 220 is activated, and the same lamp 17 emit intermittent light when the upper sensor 230 is activated.

Preferably the lamp 17 is energized in the said intermittent manner starting from the second activation of the upper sensor 230.

By this means the vehicle driver is warned that the unit is operating abnormally.

The merits and advantages of the invention are apparent from the aforegoing and from an examination of the accompanying figures. The invention is not limited to that illustrated and described, but covers all the technical equivalents of the invention and their combinations, if implemented within the context of the following claims.

## Claims

1. A unit for automatically bleeding off the water which separates in a vehicle fuel filter (1), installed on a vehicle having a switch means operated by the ignition key and having a first activation position in which the unit is activated but the engine remains switched off, the unit consisting of the ignition key of the vehicle, a disposable container containing a filtering diaphragm (4) and comprising a separated water collection chamber (5) provided with a discharge port (6) for said water; a withdrawal device (7) permanently associated with the vehicle provided for discharging said water when this reaches a predetermined level, a sensor means (19) for sensing the water level in the chamber (5) permanently installed in the chamber (5), and a microprocessor (14) connected to said sensor means and to said withdrawal device such as to activate this latter, when the water reaches a predetermined level, said sensor means comprising a differential level reading and monitoring system comprising two measurement members, one sensitive to the said predetermined water level in the chamber, and the other sensitive to a level of the water in the chamber more distant than said predetermined level from the the bottom of the chamber, said measurement members being connected to said microprocessor such that it energizes said withdrawal device in response to the signal emitted by one or other of said measurement members when the ignition key is in said first activation position., **characterised in that** said measurement members consist of two coaxial floats having a specific gravity between that of the fuel and that of water positioned within a cup- shaped guide member, of which the base part is centrally holed and is sealed inside the filter discharge port, and the wall is perforated, a respective sensor being associated with each individual float.

2. A unit as claimed in claim 1, **characterised in that** one of said floats faces the base of said cup-shaped member and is shaped as a centrally holed bowl, and the other is shaped as a mushroom, the stem of which is inserted slackly into the cavity of said bowl shape.

3. A unit as claimed in claim 2, **characterised in that** said cup-shaped guide member is provided with respective stops limiting the upward travel of said floats, said sensors being positioned at said stops.

4. A unit as claimed in claim 3, **characterised in that** said sensors consist of magnetic proximity microswitches.

5. A unit as claimed in claim 3, **characterised in that** said sensors consist of optical sensors.

6. A unit as claimed in claim 1 **characterised in that** said microprocessor and said withdrawal device are positioned in a casing to be permanently installed on the vehicle and sealedly coupled removably to the discharge port of the chamber (5) by a coupling.

7. A unit as claimed in claim 6, **characterised in that** said coupling comprises two pairs of electrically conductive annular tracks positioned on the outside of the base of said cup-shaped guide member and connected to said two sensors, and two pairs of electrically conductive and elastically yieldable push rods positioned on the top of said casing and connected to said microprocessor.

8. A unit as claimed in claim 7, **characterised in that** said two sensors are connected in parallel with a common warning lamp.

9. A unit as claimed in claim 8, **characterised in that** said microprocessor is provided with means arranged to differently energize said warning lamp depending on which sensor has emitted the overfull signal.

10. A unit as claimed in claim 7, **characterised in that** said microprocessor is provided with timer means arranged to select the period of activation of the water withdrawal device on the basis of which sensor has emitted the overfull signal.

## Patentansprüche

1. Einheit zur automatischen Ableitung des sich in einem Fahrzeugkraftstofffilter (1) ansammelnden Wassers, die an einem Fahrzeug installiert ist, welches eine mit dem Zündschlüssel betätigte Schalteinrichtung mit einer ersten Aktivierungsposition aufweist, in der die Einheit aktiviert wird, der Motor jedoch ausgeschaltet bleibt, wobei die Einheit den Zündschlüssel des Fahrzeuges, einen Einwegbehälter, der eine Filtermembran (4) enthält und eine separate Wassersammelkammer (5) aufweist, die mit einem Auslassanschluss (6) für das Wasser versehen ist; eine dauerhaft mit dem Fahrzeug verbundene Entnahmevorrichtung (7), die zum Auslassen von Wasser vorgesehen ist, wenn dieses einen zuvor festgelegten Pegel erreicht, eine Sensoreinrichtung (19) zum Abtasten des Wasserpegels in der Kammer (5), die dauerhaft in der Kammer (5) installiert ist, und einen mit der Sensoreinrichtung und der Entnahmevorrichtung verbundenen Mikroprozessor (14), um diesen Letzteren zu aktivieren, wobei die Sensoreinrichtung ein Differenzpegelablese- und Überwachungssystem mit zwei Messelementen umfasst, wovon eines empfindlich für den zuvor festgelegten Pegel in der Kammer und das andere empfindlich für einen Pegel des Wassers in der Kammer ist, der weiter als der zuvor festgelegte Pegel von dem Boden der Kammer entfernt ist, wobei die Messelemente so mit dem Mikroprozessor verbunden sind, dass er die Entnahmevorrichtung als Reaktion auf das durch eines oder das andere der Messelemente ausgesendete Signal mit Energie versorgt, wenn sich der Zündschlüssel in seiner ersten Aktivierungsposition befindet,
**dadurch gekennzeichnet, dass**
die Messelemente aus zwei koaxialen Schwimmern bestehen, die eine relative Dichte aufweisen, welches zwischen demjenigen des Kraftstoffes und demjenigen von innerhalb eines schalenförmigen Führungselementes positioniertem Wasser liegt, wovon der Basisteil mittig ausgehöhlt und innerhalb des Filterauslassanschlusses abgedichtet ist und die Wand perforiert ist, wobei jeweils ein Sensor mit jedem einzelnen Schwimmer verbunden ist.

2. Einheit nach Anspruch 1,
**dadurch gekennzeichnet, dass**
einer der Schwimmer der Basis des schalenförmigen Elementes gegenüberliegt und in Form einer mittig ausgehöhlten Schüssel ausgebildet ist, wobei der andere in Form eines Pilzes ausgebildet ist, dessen Schaft lose in den Hohlraum der Schüsselform eingesetzt ist.

3. Einheit nach Anspruch 2,
**dadurch gekennzeichnet, dass**
das schalenförmige Führungselement mit jeweiligen Anschlagstücken versehen ist, welche die Aufwärtsbewegung der Schwimmer begrenzen, wobei die Sensoren an den Anschlagstücken positioniert sind.

4. Einheit nach Anspruch 3,
**dadurch gekennzeichnet, dass**
die Sensoren aus magnetischen Näherungsmikroschaltern bestehen.

5. Einheit nach Anspruch 3,
**dadurch gekennzeichnet, dass**
die Sensoren aus optischen Sensoren bestehen.

6. Einheit nach Anspruch 1,
**dadurch gekennzeichnet, dass**
der Mikroprozessor und die Entnahmeeinheit in einem Gehäuse positioniert sind, welches dauerhaft auf dem Fahrzeug zu installieren und mittels einer Kupplung abgedichtet abnehmbar mit dem Auslassanschluss der Kammer (5) verbunden ist.

7. Einheit nach Anspruch 6,
**dadurch gekennzeichnet, dass**
die Kupplung zwei Paare elektrisch leitender, ringförmiger Spuren aufweist, die auf der Außenseite der Basis des schalenförmigen Führungselementes positioniert und mit den zwei Sensoren verbunden sind, und zwei Paare elektrisch leitender und elastisch nachgiebiger Stößelstangen, die oben auf dem Gehäuse positioniert und mit dem Mikroprozessor verbunden sind.

8. Einheit nach Anspruch 7,
**dadurch gekennzeichnet, dass**
die zwei Sensoren mit einer gemeinsamen Warnlampe parallelgeschaltet sind.

9. Einheit nach Anspruch 8,
**dadurch gekennzeichnet, dass**
der Mikroprozessor mit Einrichtungen versehen ist, die dafür vorgesehen sind, um die Warnlampe in Abhängigkeit davon unterschiedlich mit Energie zu versorgen, welcher Sensor das Randvoll-Signal ausgesendet hat.

10. Einheit nach Anspruch 7,
**dadurch gekennzeichnet, dass**
der Mikroprozessor mit Zeitgebereinrichtungen versehen ist, die dafür vorgesehen sind, um den Zeitraum der Aktivierung der Wasserentnahmevorrichtung auf der Grundlage auszuwählen, welcher Sensor das Randvoll-Signal ausgesendet hat.

## Revendications

1. Unité de purge automatique de l'eau qui se sépare dans un filtre (1) à carburant de véhicule installé sur un véhicule ayant un dispositif de commutation manoeuvré par la clé d'allumage et ayant une première position d'activation dans laquelle l'unité est activée mais le moteur reste à l'état arrêté, l'unité étant constituée de la clé d'allumage du véhicule, un récipient jetable contenant un diaphragme (4) de filtration et comprenant une chambre collectrice (5) non séparée munie d'un canal d'évacuation (6) de l'eau, un dispositif d'extraction (7) associé de façon permanente au véhicule et destiné à évacuer l'eau lorsque celle-ci atteint un niveau prédéterminé, un dispositif capteur (19) destiné à détecter le niveau de l'eau dans la chambre (5), installé de façon permanente dans la chambre (5), et un microprocesseur (14) connecté au dispositif capteur et au dispositif d'extraction afin qu'il active ce dernier lorsque l'eau atteint un niveau prédéterminé, le dispositif capteur comprenant un système de lecture et de contrôle de niveau différentiel comprenant deux organes de mesure, l'un sensible au niveau prédéterminé de l'eau dans la chambre et l'autre sensible à un niveau de l'eau dans la chambre plus distant du niveau prédéterminé par rapport au fond de la chambre, les organes de mesure étant connectés au microprocesseur afin qu'ils alimentent le dispositif d'extraction à la suite du signal émis par l'un ou l'autre des organes de mesure lorsque la clé d'allumage est dans sa première position d'activation, **caractérisée en ce que** les organes de mesure sont constitués de deux flotteurs coaxiaux ayant une densité comprise entre celle du carburant et celle de l'eau et placés dans un organe de guidage en forme de cuvette dont la partie de base a un trou central et coopère de façon étanche avec le canal d'évacuation du filtre, et la paroi est perforée, le capteur respectif étant associé à chaque flotteur individuel.

2. Unité selon la revendication 1, **caractérisée en ce que** le premier des flotteurs est tourné vers la base de l'organe en forme de cuvette et a une configuration de bol à trou central, et l'autre a une forme de champignon dont la tige est insérée avec du jeu dans la cavité de la forme de bol.

3. Unité selon la revendication 2, **caractérisée en ce que** l'organe de guidage en forme de cuvette a des organes respectifs d'arrêt limitant le déplacement vers le haut des flotteurs, les capteurs étant disposés au niveau des organes d'arrêt.

4. Unité selon la revendication 3, **caractérisée en ce que** les capteurs sont constitués de microcontacts magnétiques de proximité.

5. Unité selon la revendication 3, **caractérisée en ce que** les capteurs sont constitués de capteurs optiques.

6. Unité selon la revendication 1, **caractérisée en ce que** le microprocesseur et le dispositif d'extraction sont disposés dans un carter destiné à être installé de façon permanente sur le véhicule et couplé de façon étanche et amovible au canal d'évacuation de la chambre (5) par un raccord.

7. Unité selon la revendication 6, **caractérisée en ce que** le raccord comprend deux paires de pistes annulaires conductrices de l'électricité disposées à l'extérieur de la base de l'organe de guidage en forme de cuvette et connectées aux deux capteurs, et deux paires de tiges poussoirs conductrices de l'électricité et pouvant fléchir élastiquement, disposées à la partie supérieure du carter et connectées au microprocesseur.

8. Unité selon la revendication 7, **caractérisée en ce que** les deux capteurs sont connectés en parallèle avec une lampe témoin commune.

9. Unité selon la revendication 8, **caractérisée en ce que** le microprocesseur comporte un dispositif destiné à alimenter différemment la lampe témoin selon le capteur qui a émis le signal de débordement.

10. Unité selon la revendication 7, **caractérisée en ce que** le microprocesseur comporte un dispositif à minuterie destiné à sélectionner la période d'activation du dispositif d'extraction d'eau en fonction du capteur qui a émis le signal de débordement.
